# EUROPEAN PATENT APPLICATION

(11) **EP 1 052 577 A2**
(43) Date of publication of application: **15.11.2000**
(21) Application number: 00302787.7
(22) Date of filing: 31.03.2000
(51) Int. Cl.: G06F 17/30

(54) **Data file analysis**

(30) Priority: 08.05.1999 GB 9910590
(71) Applicant: International Computers Ltd., London, EC2A 1SL (GB)
(72) Inventor: Thornton, Reuben Hal, Hyde, Cheshire SK14 8NN (GB)
(74) Representative: Guyatt, Derek Charles

(57) **Abstract**

A method of analysing potentially very large data files including a number of records, each consisting of a number of fields, and generating one or more summaries of the data file. This is achieved using a predictable amount of memory regardless of the size of the data file (important for reliably processing large data files), and while only reading the records from the file once (important for processing large data files efficiently). A signature of each record, comprising a number of fields, each some function of the fields within the original record, is formed (3) as each record of the data file (1) is read (2) in turn. Summary information is maintained for each distinct signature, such as the number of records with that signature (count). The total number of signatures can be contained by banding continuous fields into particular value ranges (histogram), and by setting limits on the range of permitted values (cap), thus containing the amount of memory required. A separate signature is generated and processed for each summary required. Once the data file has been processed (6), each summary (set of distinct signatures) is output (7), including intermediate "null" values for signatures which did not appear in the data file but whose fields are designated as continuous (4, 5). In this way, a complete range of values can be output which is easier to analyse further (e.g. plot on a graph).

## Description

This invention relates to data file analysis and in particular to the analysis of large data files and the production of summaries therefrom.

Analysing the large data sets generated by enterprise systems, sometimes containing many millions of records, presents a number of problems using existing tools. Data sets have to be pre-processed using bespoke code, for example, rounding fields to histogram band boundaries. The amount of memory required to produce a summary is not predictable so, for example, the analysis process may run out of memory and abort. Summaries have to be post-processed using bespoke code, for example, for filling in "gaps" in order to allow the data to be graphed. In addition, the data has to be processed repeatedly in order to produce multiple analyses, which is a problem for very large data sets. The present invention aims to solve these problems.

According to one aspect of the present invention there is provided a method of analysing a data file including a number of records, each consisting of a plurality of fields, and generating a summary of the data file, comprising:
(a) specifying a method of forming at least one signature from a said record, each signature comprising a respective modified version of the said record;
(b) specifying summary data required for each formed signature;
(c) reading the data file a record at a time and for each record read
   - forming the at least one signature from the record by the specified method,
   - for the first record read creating a respective entry in a summary table comprising each formed signature and the specified summary data,
   - for the second and each subsequent record read, comparing the formed signatures with the entries in the summary table, and if a corresponding one is not present creating a new respective entry in the summary table, and if a corresponding one is present updating the entry in the summary table in accordance with the summary data, and
(d) outputting the summary table when all records have been read and processed as in step (c).

According to another aspect of the present invention there is provided a method of analysing a data file including a number of records, each consisting of a plurality of fields, and generating a summary of the data file, comprising:
(a) specifying a method of forming at least one signature from a said record, each signature comprising a respective function of one or more of the fields of the said record and being such that the content of at least one of said fields in the signature differs from that in the said record in a predetermined manner;
(b) specifying summary data required for each formed signature;
(c) reading the data file a record at a time and for each record read
   - forming the at least one signature from the record by the specified method,
   - for the first record read creating a respective entry in a summary table comprising each formed signature and the specified summary data,
   - for the second and each subsequent record read, comparing the formed signatures with the entries in the summary table, and if a corresponding one is not present creating a new respective entry in the summary table, and if a corresponding one is present updating the entry in the summary table in accordance with the summary data, and
(d) outputting the summary table when all records have been read and processed as in step (c).

According to a further aspect of the present invention there is provided a computer-readable storage medium having a program recorded therein, the program serving to analyze a data file including a number of records, each consisting of a plurality of fields, and to generate a summary of the data file, by performing the steps of:
(a) specifying a method of forming at least one signature from a said record, each signature comprising a respective modified version of the said record;
(b) specifying summary data required for each formed signature;
(c) reading the data file a record at a time and for each record read
   - forming the at least one signature from the record by the specified method,
   - for the first record read creating a respective entry in a summary table comprising each formed signature and the specified summary data,
   - for the second and each subsequent record read, comparing the formed signatures with the entries in the summary table, and if a corresponding one is not present creating a new respective entry in the summary table, and if a corresponding one is present updating the entry in the summary table in accordance with the summary data, and
(d) outputting the summary table when all records have been read and processed as in step (c).

Embodiments of the invention will now be described with reference to the accompanying drawings in which
Fig 1 illustrates the flow of data for the summarise by signature method of the present invention for the case of a single summary to be produced from a data set, and
Fig 2 illustrates the flow of data for the production of three different summaries from a data set.

To facilitate understanding, a simple example of file analysis will first be considered for a data file which consists of three fields per line, namely: shape, colour and size.

### Example 1

Circle, Red, 12
Square, Blue, 10
Triangle, Red, 5
Square, Green, 2
Square, Blue, 4
Circle, Blue, 8

Assuming that it is required to match shape and colour, and output average size, the above data file can be reduced to
Circle, Red, 12
Square, Blue,7
Triangle, Red, 5
Square, Green, 2
Circle, Blue 8
since there are two "Square, Blue" entries and their average size is (10+4)/2, i.e. 7.

By matching shape, and outputting count of shape and average size, the data file could also be reduced to
Circle, 2, 10
Square, 3, 5.33
Triangle, 1,5
since there are 2 "Circle" entries and 3 "Square" entries.

This can be achieved by a program that processes the file as follows: 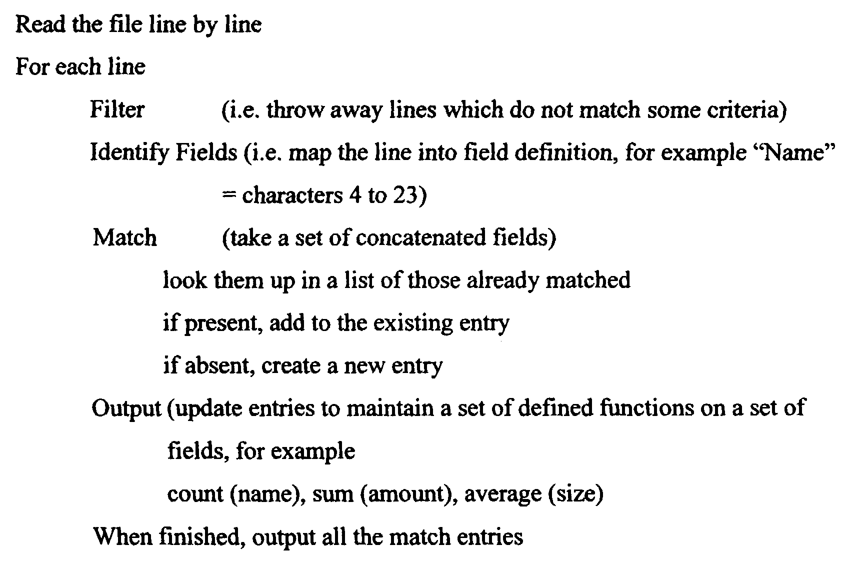 In more general terms, it is proposed that for a data set made up of records (lines in a file, rows in a table, messages etc) a method of generating a "signature" for a record is specified and a method of summarising output data for a record is specified, and in a specific case a "signature space" for the output is specified, and there is then produced a summary of output for each "signature", in the "signature space" in the specific case. The algorithm required for this may, for example, be as below.

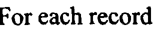

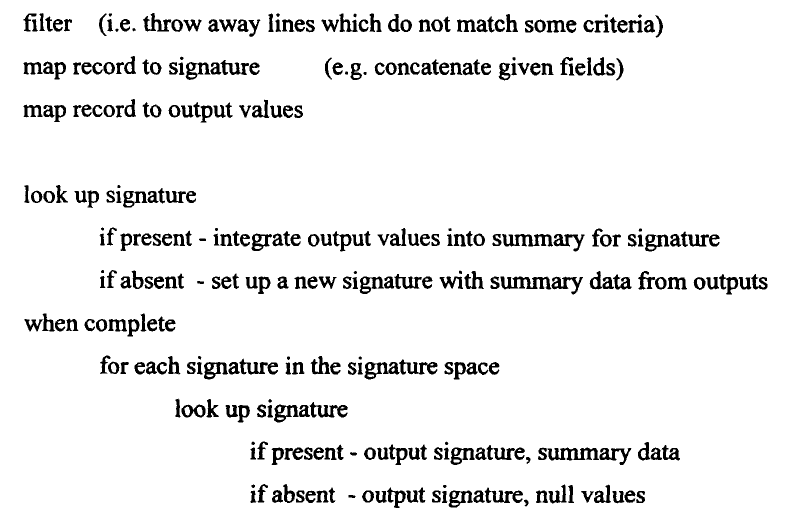

This process can be referred to as "summarise by signature". Each signature is a function of the fields within a record and is a "modification" of that record. In a simple case it may just be a concatenation of several fields, but in more complex cases, functions can be applied to these fields to produce the signature, for example grouping into "bands" (i.e. round to the nearest N), or the difference between two fields etc. Summaries are provided for each distinct signature value found in the data set. These can be simple, for example, a count of the records with that signature, or more complex, for example, the average, sum, minimum or maximum values for given input fields.

The use of a "signature" allows a more complex mapping from a record to a summary than a simple set of columns. This permits control of the categories that data is collected into, rather than categorising by the data values present in the records.

When the data set has been completely processed, the summaries for each distinct signature (for each of the summaries to be produced) are output.

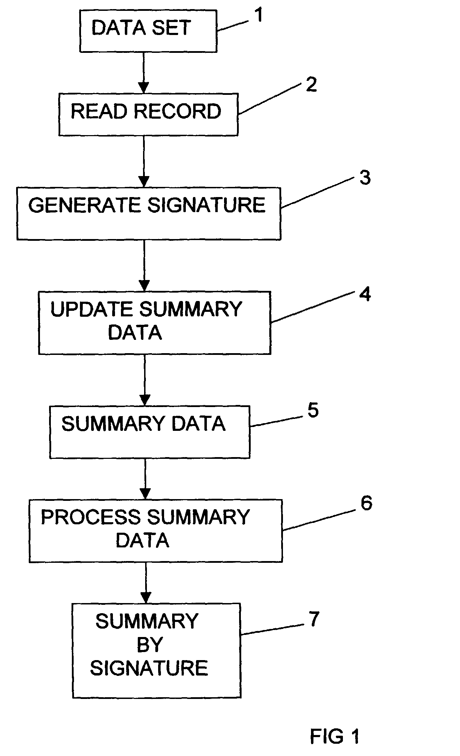

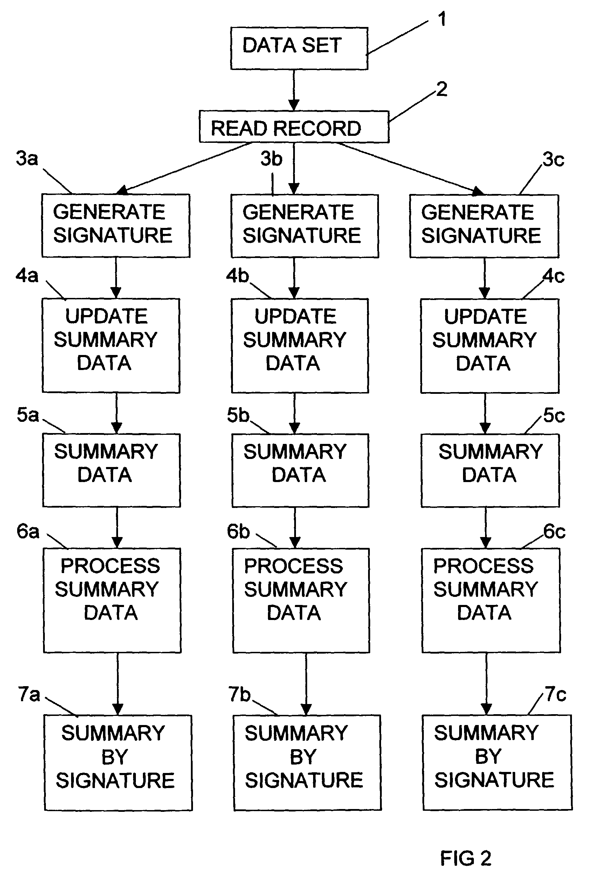

Fig 1 illustrates the flow of data in the case of the production of a single summary from each record read. The records from a data set 1 are read one at a time in step 2 and a signature is generated in step 3. The generated signature is then employed to update the summary data in step 4, resulting in summary data 5. The summary data is then processed in step 6, as required for example to fill in the gaps between signature spaces, resulting in respective summary by signature data 7. Fig 2 illustrates the corresponding process for the generation of multiple signature streams at steps 3a, 3b, 3c from a single read process at step 2, and resulting in multiple summaries 7a, 7b, 7c, there being three steps etc a, b, c for each step of Fig 1, after step 2.

As mentioned above, each summary can be put into its own "signature space". What this means will be more easily understood from the following example, which is a snippet from a large data file with data in the form - action, response time - from MS Exchange.

### Example 2

SEND, 370
DELIVER, 684
SEND, 541
SEND, 302

For an analysis comprising a response time histogram, giving a count of the number of operations in the file for each time that fell within a given response time band, the "signature" in this case is action + response time rounded to the nearest 100ms, capped at 10s

For the above snippet, this would give
SEND, 300,2
SEND, 400,0
SEND, 500, 1
DELIVER, 600, 1

The "400" value is provided automatically, when the summary entries are output, as a result of the "signature space" idea, although the snippet contained no "400" value. The "signature space" idea fills in any "gaps" in the summary entries, when they are output, to make them easier to analyse. In other words, there is a concept of a "full range" of category values which could be populated, and null values are output if they are not populated. In order to obtain this result with prior art methods, additional post-processing using bespoke code would be required. A "signature space" essentially indicates that given fields which make up the signature should be continuous, that is the values should increase by a fixed amount without any "gaps". When the summary entries are output, interim signature values are output whenever gaps are detected, and null values (for example a zero count) are given for the respective summary data.

As discussed above, the data to be analysed consists of a number of records which could be lines in a file, rows in a table. In order to analyse large data sets effectively, it is important that the amount of memory required is not proportional to the size of the data set, that the amount of memory required is predictable, and that the data set is only scanned once. At the same time, the data set needs to be summarised into a set of manageable summaries with as much flexibility as possible. This is achieved with the summaries by signature and signature space approach described above.

The following parameters must be specified:
- input fields (the input fields must be defined as the nth delimited field or a fixed length and offset within the record
- summary definitions (one or more summary definitions must be specified).

Each summary definition requires:
- signature specification (this specifies how to generate the signature from the input fields)
- summary specification (this specifies which functions on which fields to maintain for each distinct signature)

The method then comprises the following:

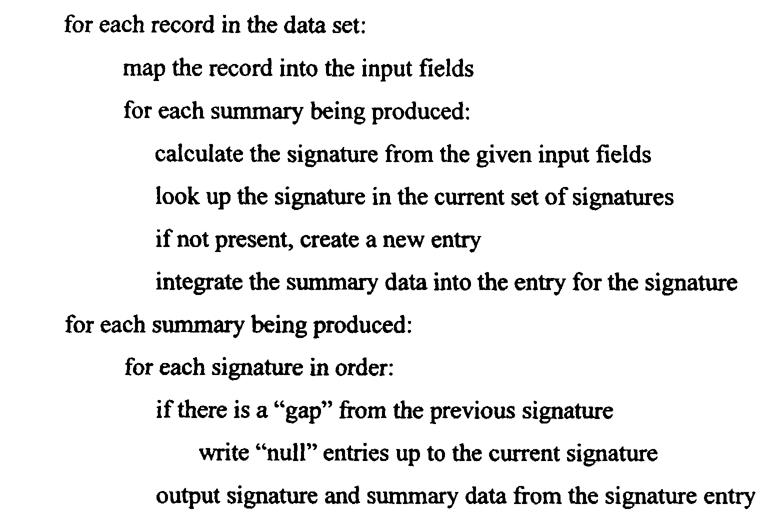

For the example given below, mapping the record into the input fields uses comma-separated fields 1....N; one summary is produced; the signature is calculated by concatenating fields and applying histogram/cap functions; looking up the signature in the current set of signatures uses a binary tree for speed of searching; integrating the summary data into the entry for the signature corresponds to adding a count for each entry; "if there is a "gap" from the previous signature" corresponds to "if "histogram" fields differs by more than the "band" size"; and "write "null" entries up to the current signature" corresponds "to write entries for each missing "band" ".

The method may additionally involve filters at various stages to improve flexibility; such as by skipping records (for example the first N lines, or until a line contains given text); or filtering records by input field values, and the method may provide integration with other file processing such as merging of files or filtering of columns.

### Example 3

### Raw data:

Mar 01 12:52:00, DELIVER, 5594, 0x00000de4, 1, exch
Mar 01 12:52:00, READ, 60, 0x000019el, 1, exch
Mar 01 12:52:00, DELIVER, 62, 0x000019el, 1, exch
Mar 01 12:52:00, READ, 60, 0x00000e25, 1, exch
Mar 01 12:52:00, DELIVER, 1906, 0x00000e25, 1, exch
Mar 01 12:52:00, READ, 91, 0x00001343, 1, exch
Mar 01 12:52:00, READ, 51, 0x00001e47, 1, exch
Mar 01 12:52:00, DELIVER, 2828, 0x00001e47, 1, exch
Mar 01 12:52:00, READ, 60, 0x00001e07, 1, exch
Mar 01 12:52:00, DELIVER, 3109, 0x00001e07, 1, exch
Mar 01 12:52:00, SUBMIT, 110, 0x00001ddl, 1, exch
Mar 01 12:52:00, REPLY ALL, 140, 0x00001dd1, 1, exch
Mar 01 12:52:00, READ, 70, 0x00000de4, 1, exch
Mar 01 12:52:00, DELIVER, 1813, 0x00000de4, 1, exch
Mar 01 12:52:00, READ, 50, 0x000019e1, 1, exch
Mar 01 12:52:00, DELIVER, 8281, 0x000019e1, 1, exch
Mar 01 12:52:00, READ, 90, 0x00001e47, 1, exch
Mar 01 12:52:00, DELIVER, 140, 0x00001e47, 1, exch
Mar 01 12:52:00, SUBMIT, 140, 0x00001343, 1, exch

### Input fields:

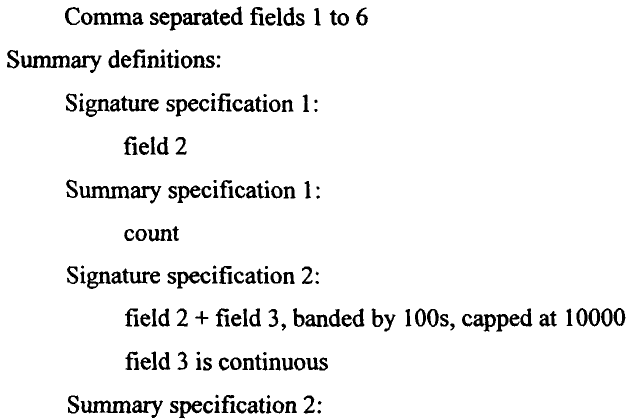

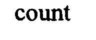

### Output:

### Summary 1:

DELIVER, 8
READ, 8
REPLY ALL, 1
SUBMIT, 2

### Summary 2:

| | |
|---|---|
| DELIVER, 0000000000, 1 | DELIVER, 4300, 0 |
| DELIVER, 0000000100, 1 | DELIVER, 4400, 0 |
| DELIVER, 200, 0 | DELIVER, 4500, 0 |
| DELIVER, 300, 0 | DELIVER, 4600, 0 |
| DELIVER, 400, 0 | DELIVER, 4700, 0 |
| DELIVER, 500, 0 | DELIVER, 4800, 0 |
| DELIVER, 600, 0 | DELIVER, 4900, 0 |
| DELIVER, 700, 0 | DELIVER, 5000, 0 |
| DELIVER, 800, 0 | DELIVER, 5100, 0 |
| DELIVER, 900, 0 | DELIVER, 5200, 0 |
| DELIVER, 1000, 0 | DELIVER, 5300, 0 |
| DELIVER, 1100, 0 | DELIVER, 5400, 0 |
| DELIVER, 1200, 0 | DELIVER, 0000005500, 1 |
| DELIVER, 1300, 0 | DELIVER, 5600, 0 |
| DELIVER, 1400, 0 | DELIVER, 5700, 0 |
| DELIVER, 1500, 0 | DELIVER, 5800, 0 |
| DELIVER, 1600, 0 | DELIVER, 5900, 0 |
| DELIVER, 1700, 0 | DELIVER, 6000, 0 |
| DELIVER, 0000001800, 1 | DELIVER, 6100, 0 |
| DELIVER, 0000001900, 0 | DELIVER, 6200, 0 |
| DELIVER, 2000, 0 | DELIVER, 6300, 0 |
| DELIVER, 2100, 0 | DELIVER, 6400, 0 |
| DELIVER, 2200, 0 | DELIVER, 6500, 0 |
| DELIVER, 2300, 0 | DELIVER, 6600, 0 |
| DELIVER, 2400, 0 | DELIVER, 6700, 0 |
| DELIVER, 2500, 0 | DELIVER, 6800, 0 |
| DELIVER, 2600, 0 | DELIVER, 6900, 0 |
| DELIVER, 2700, 0 | DELIVER, 7000, 0 |
| DELIVER, 0000002800, 1 | DELIVER, 7100, 0 |
| DELIVER, 2900, 0 | DELIVER, 7200, 0 |
| DELIVER, 3000, 0 | DELIVER, 7300, 0 |
| DELIVER, 0000003100, 1 | DELIVER, 7400, 0 |
| DELIVER, 3200, 0 | DELIVER, 7500, 0 |
| DELIVER, 3300, 0 | DELIVER, 7600, 0 |
| DELIVER, 3400, 0 | DELIVER, 7700, 0 |
| DELIVER, 3500, 0 | DELIVER, 7800, 0 |
| DELIVER, 3600, 0 | DELIVER, 7900, 0 |
| DELIVER, 3700, 0 | DELIVER, 8000, 0 |
| DELIVER, 3800, 0 | DELIVER, 8100, 0 |
| DELIVER, 3900, 0 | DELIVER, 0000008200, 1 |
| DELIVER, 4000, 0 | READ, 0000000000, 8 |
| DELIVER, 4100, 0 | REPLY ALL, 0000000100, 1 |
| DELIVER, 4200, 0 | SUBMIT, 0000000100, 2 |

Consider the Output Summary 1, which is the simple case of summarising the raw data into the signature specification 1 (field 2 ) and the summary specification 1 (count). There are 8 DELIVER reports in the raw data, 8 READ reports, 1 REPLY ALL report and 2 SUBMIT reports. This output summary table will be built up as follows: reading the first line of data results in DELIVER, 1; reading the second line of data results in two entries DELIVER, 1 and READ, 1; reading the third line of data results in two entries DELIVER, 2 and READ, 1; reading the fourth line of data results in two entries DELIVER, 2 and READ, 2 and so on, the final table having the four entries shown for Summary 1, namely DELIVER, 8; READ, 8; REPLY ALL, 1 and SUBMIT, 2.

The more complicated signature specification 2 but still simple summary specification 2 means that reading the first line of the raw data results in a single entry
- DELIVER, 0000005500, 1: since 5594 is in band 5500-5599

Reading the second line of data results in two entries
- DELIVER, 0000005500, 1:
- READ, 0000000000, 1: since 60 is in band 0-99

Reading the third line of data results in three entries
- DELIVER, 0000000000, 1: since 62 is in band 0-99
- DELIVER, 0000005500, 1:
- READ, 0000000000, 1:

Reading the fourth line of data does not change the number of entries but raises the count of the READ entry to 2.

Reading the fifth line of data results in the additional entry
- DELIVER, 0000001900, 1: for the value 1906, and so on.

Reading the fourth from last line of the data results in the last DELIVER entry, namely
- DELIVER, 0000008200, 1:

None of the DELIVER values were above the set cap value, hence there are no entries in the summary table with that value.

After reading of the last line of the data, the complete summary table can be output (Summary 2). This consists of the entries created as above, 8 DELIVER and one each for READ, REPLY ALL and SUBMIT, together with intermediate null value entries in the spaces between the actual DELIVER entries, namely entries DELIVER, 200, 0; DELIVER, 300, 0 etc.

A key feature of the analysis method proposed by the present invention is the creation of one or more "signatures" for a record, rather than the use of an existing field or fields, and being able to manipulate the data before creating the "signature" is particularly advantageous. Signatures can provide an arbitrarily complex mapping from the fields within a record to the fields within the signature. The manipulation examples referred to above, i.e. "histogram" and/or "cap" functions, respectively say to use a given field rounded down to a multiple of "N" in the signature, and/or to limit the size of a given field to "X". This makes the data from a very large data set much more tractable and can, as in the example quoted, provide a summary of response times, by transaction type, banded into 100ms bands. Since the "signature space" approach fills in the gaps between entries, such as of a particular transaction type, albeit with null values, subsequent graphing, for example using a spreadsheet, is facilitated. The signature space provides a predetermined range of output values.

The invention provides a method of analysing large data sets which is a powerful and flexible way of generating summaries of that data in an efficient manner, and requires only a single pass of the data. The summary by signature approach solves the aforementioned problems by integrating the pre-processing into the summarising process by using processed "signatures" to summarize by. Without signatures, the data has to be pre-processed to provide the input to the summary stage. A contained "signature space" is allowed, giving predictable memory requirements, using histogram and cap functions, and removing the need for post-processing by filling in gaps for the histogram function. In addition, multiple signature streams from a single read process are allowed.

## Claims

1. A method of analysing a data file (1) including a number of records, each consisting of a plurality of fields, and generating a summary of the data file, comprising:
(a) specifying a method of forming at least one signature from a said record, each signature comprising a respective modified version of the said record;
(b) specifying summary data required for each formed signature;
(c) reading (2) the data file (1) a record at a time and for each record read
- forming (3) the at least one signature from the record by the specified method,
- for the first record read creating (5) a respective entry in a summary table comprising each formed signature and the specified summary data,
- for the second and each subsequent record read, comparing the formed signatures with the entries in the summary table, and if a corresponding one is not present creating (5) a new respective entry in the summary table, and if a corresponding one is present updating (4) the entry in the summary table in accordance with the summary data, and
(d) outputting the summary table (7) when all records have been read and processed (6) as in step (c).

2. A method as claimed in claim 1, wherein a said signature comprises a smaller number of fields than the plurality of fields.

3. A method as claimed in claim 1 or claim 2 wherein in step (a) a function is applied to the data in one of the fields in the record whereby the data in the corresponding field in a said signature differs therefrom in a predetermined manner.

4. A method as claimed in claim 3, wherein the function comprises a rounding up or rounding down function whereby entries in a field of the data file containing numerical data values are simplified.

5. A method as claimed in claim 3 or 4, wherein the summary table includes a number of numerical value bands into which signature entries having a field containing numerical values are inserted.

6. A method as claimed in claim 5, wherein the summary table includes a count of the number of entries in each said numerical value band, and wherein the output summary table includes a full range of numerical value bands, and any gaps, between bands having entries, being filled by bands with no entries that are output as summaries with null counts.

7. A method as claimed in any one of claims 1 to 6, wherein the summary data specifies a minimum and a maximum value for numerical data values for a field in the data file containing numerical data values, whereby to restrict the range of data values in the output summary table and/or the order of entries in the output summary table.

8. A method as claimed in any one of claims 1 to 6, wherein a said signature specifies a maximum value for numerical data values for a field in the data file containing numerical data values, whereby to limit the upper value of the numerical entry in the output summary table.

9. A method of analysing a data file (1) including a number of records, each consisting of a plurality of fields, and generating a summary of the data file, comprising:
(a) specifying a method of forming at least one signature from a said record, each signature comprising a respective function of one or more of the fields of the said record and being such that the content of at least one of said fields in the signature differs from that in the said record in a predetermined manner;
(b) specifying summary data required for each formed signature;
(c) reading (2) the data file (1) a record at a time and for each record read
- forming (3) the at least one signature from the record by the specified method,
- for the first record read creating (5) a respective entry in a summary table comprising each formed signature and the specified summary data,
- for the second and each subsequent record read, comparing the formed signatures with the entries in the summary table, and if a corresponding one is not present creating (5) a new respective entry in the summary table, and if a corresponding one is present updating (4) the entry in the summary table in accordance with the summary data, and
(d) outputting the summary table (7) when all records have been read and processed (6) as in step (c).

10. A method as claimed in claim 9, wherein a said signature comprises a smaller number of fields than the plurality of fields.

11. A method as claimed in claim 10, wherein a said signature comprises a single field including a number of categories for the entries therein, and the summary comprises a count of the respective category entries.

12. A method as claimed in claim 10, wherein a said signature comprises a predetermined number of fields, one of which includes numerical data values, and wherein the function comprises a rounding up or rounding down function whereby the numerical data values are simplified.

13. A method as claimed in claim 10 or 12, wherein the summary table includes a number of numerical value bands into which signature entries having a field containing numerical values are inserted.

14. A method as claimed in claim 13 wherein the summary table includes a count of the number of entries in each said numerical value band, and wherein the output summary table includes a full range of numerical value bands, any gaps, between bands having entries, being filled by bands with no entries that are output as summaries with null counts.

15. A method as claimed in claim 14, wherein the summary data specifies a minimum and a maximum value for numerical data values, whereby to restrict the range of data values in the output summary table and/or the order of entries in the output summary table.

16. A computer-readable storage medium having a program recorded therein, the program serving to analyze a data file including a number of records, each consisting of a plurality of fields, and to generate a summary of the data file, by performing the steps of:
(a) specifying a method of forming at least one signature from a said record, each signature comprising a respective modified version of the said record;
(b) specifying summary data required for each formed signature;
(c) reading (2) the data file (1) a record at a time and for each record read
- forming (3) the at least one signature from the record by the specified method,
- for the first record read creating (5) a respective entry in a summary table comprising each formed signature and the specified summary data,
- for the second and each subsequent record read, comparing the formed signatures with the entries in the summary table, and if a corresponding one is not present creating (5) a new respective entry in the summary table, and if a corresponding one is present updating (4) the entry in the summary table in accordance with the summary data, and
(d) outputting the summary table (7) when all records have been read and processed (6) as in step (c).
